# EUROPÄISCHE PATENTANMELDUNG

(11) **EP 1 879 097 A2**
(43) Veröffentlichungstag der Anmeldung: **16.01.2008**
(21) Anmeldenummer: 07108185.5
(22) Anmeldetag: 14.05.2007
(51) Int. Cl.: G06F 3/02

(54) **Tastatur**

(30) Priorität: 10.07.2006 DE 102006031854
(71) Anmelder: Cherry GmbH, 91275 Auerbach/Opf. (DE)
(72) Erfinder: Hübner, Horst, 95444, Bayreuth (DE); Müller, Karl-Heinz, 91275, Auerbach/Opf. (DE); Schramm, Dirk, 90596, Schwanstetten (DE)
(74) Vertreter: Molnia, David

(57) **Zusammenfassung**

Die Erfindung bezieht sich auf eine Tastatur mit einem Gehäuseoberteil, das einen Tastenfeldbereich zur Anordnung einer Vielzahl von Tasten aufweist, dadurch gekennzeichnet, dass das Gehäuseoberteil im Tastenfeldbereich wellenförmig ausgebildet ist.

## Beschreibung

Die Erfindung bezieht sich auf eine Tastatur für einen Computer.

Aufgrund des enormen Kostendrucks bei Produkten aus dem Computerbereich besteht bei der Herstellung von Tastaturen für Computer die Notwendigkeit zur ständigen Kostenreduzierung, wobei jedoch die Gebrauchsfähigkeit und Funktionssicherheit erhalten bleiben oder sogar verbessert werden soll. Kosteneinsparungen bei der Produktion von Tastaturen für Computer sind unter anderem durch Materialeinsparungen und Vereinfachungen des Herstellungsprozesses zu erreichen.

Neben einem günstigen Preis zeichnen sich konkurenzfähige Produkte auch durch von Konkurenzprodukten unterscheidende, vorteilhafte Eigenschaften aus. Eine solche Eigenschaft ist bei Tastaturen beispielsweise eine geringe Geräuschentwicklung bei der Betätigung der Tasten. Das Tastenanschlagsgeräusch wird von vielen Computerbenutzern als störend empfunden und kann besonders in Großraumbüros mit vielen Benutzern zu einem hohen Lärmpegel führen.

Es ist daher eine Aufgabe der vorliegenden Erfindung, eine Tastatur zur Verfügung zu stellen, die im Vergleich zu einer Tastatur nach dem Stand der Technik aufgrund von Materialeinsparungen und Vereinfachungen im Produktionsprozess kostengünstiger herstellbar ist und gleichzeitig verbesserte Eigenschaften bezüglich der Geräuschentwicklung beim Betätigen der Tasten besitzt.

Diese Aufgabe wird durch eine erfindungsgemäße Tastatur gelöst.

Eine erfindungsgemäße Tastatur besitzt ein Gehäuseoberteil, das einen Tastenfeldbereich zur Anordnung einer Vielzahl von Tasten aufweist, wobei das Gehäuseoberteil im Tastenfeldbereich wellenförmig ausgebildet ist.

Ein Gehäuse einer erfindungsgemäßen Tastatur weist bevorzugterweise ein Gehäuseunterteil und das auf dem Gehäuseunterteil angeordnete Gehäuseoberteil auf.

Das Gehäuseoberteil besitzt eine Außenseite und eine der Außenseite gegenüberliegende Innenseite, wobei die Außenseite die bei zusammengebauter Tastatur sichtbare Seite des Gehäuseoberteils ist.

Der Tastenfeldbereich ist ein Teilbereich des Gehäuseoberteils in dem eine Vielzahl von Tasten zu einem Tastenfeld gruppiert sind. In dem Tastenfeldbereich können beispielsweise Tasten eines normalen Eingabebereichs (Schreibmaschinentastatur), eines Ziffernblocks, eines Cursor-Steuertastenblocks oder eines Funktionstastenblocks angeordnet sein.

Das Gehäuseoberteil weist im Tastenfeldbereich Führungsdome auf. Die Führungsdome sind vorzugsweise dünnwandige, gerade Rohrstücke, die durch das Gehäuseoberteil ragen und an diesem befestigt sind. Vorteilhafterweise ist das Gehäuseoberteil in einem Stück mittels eines Spritzgussverfahrens aus einem Kunststoff gefertigt, so dass die Führungsdome an dem Gehäuseoberteil angeformt sind. Durch die Rohröffnung eines Führungsdoms ist ein Tastenknopf einer Taste über einen Stößel mit einem Tastenbasisteil verbunden, so dass bei einer Betätigung der Taste die Ab- und Aufbewegung des Tastenknopfs, der an der Außenseite des Gehäuseoberteils angeordnet ist, über den Stößel an das Tastenbasisteil im Inneren der Tastatur übertragbar ist.

Die Aufgrund Führungsdome stellen eine mechanische Verstärkung gegen äußere Biege- und Torsionskräfte dar. Zwischen den Führungsdomen ist das Gehäuseoberteil im Tastenfeldbereich strukturell geschwächt. Um dieser Schwächung entgegenzuwirken, sind Gehäuseteile von Tastaturen nach dem Stand der Technik üblicherweise im Bereich eines Tastenfelds mittels Versteifungsrippen verstärkt. Eine Anbringung von Versteifungsrippen erfordert jedoch zusätzliches Material und aufwendiger gestaltete Werkzeugformen. Weiterhin erschweren die üblichen Materialanhäufungen am Grund der Versteifungsrippen die Temperaturführung während des Herstellungsprozesses. Ferner kommt es bei Werkstücken mit Versteifungsrippen gewöhnlicherweise zu einem Aufschrumpfen des Werkstücks auf die Werkzeugform, was ein Ausstoßen des fertigen Werkstücks behindert.

Eine erfindungsgemäße Tastatur überwindet die genannten Nachteile aus dem Stand der Technik durch eine erfindungsgemäße Gestaltung des Gehäuseoberteils im Tastenfeldbereich. In einer erfindungsgemäßen Tastatur ist das Gehäuseoberteil im Tastenfeldbereich wellenförmig ausgebildet, was eine Erhöhung der Steifigkeit des Gehäuseoberteils bewirkt und eine Anbringung von Versteifungsrippen erübrigt, wodurch im Vergleich zu einer Tastatur nach dem Stand der Technik Material eingespart wird. Durch die wellenförmige Ausbildung des Gehäuseoberteils im Tastenfeldbereich wird der Effekt genutzt, dass ein gewelltes, flächiges Bauteil eine größere Steifigkeit aufweist als ein ebenes, flächiges Bauteil.

Das Gehäuseoberteil weist im Tastenfeldbereich eine annähernd konstante Wanddicke auf, was wegen der damit verbundenen, gleichmäßigen Materialverteilung vorteilhaft für den Herstellungsprozess ist.

Vorzugsweise verlaufen Wellenmaxima und Wellenminima des im Tastenfeldbereich wellenförmig ausgebildeten Gehäuseoberteils annähernd parallel zur Längsachse der Tastatur, so dass die Tasten im Tastenfeldbereich auf Linien angeordnet sind, die parallel zu den Wellenmaxima und Wellenminima ausgerichtet sind.

Das im Tastenfeldbereich wellenförmig ausgebildete Gehäuseoberteil weist vorzugsweise an zur Längsachse der Tastatur parallelen Seiten des Tastenfeldbereichs in Bezug zur Außenseite des Gehäuseoberteils ein Wellenminimum auf, wodurch im Tastenfeldbereich des Gehäuseoberteils eine wannenartige Vertiefung mit einem gewellten Boden entsteht.

In einer bevorzugten Ausführungsform einer erfindungsgemäßen Tastatur weist das Gehäuseoberteil weitere Tastenfeldbereiche zur Anordnung einer Vielzahl von Tasten auf, wobei das Gehäuseoberteil in den weiteren Tastenfeldbereichen wellenförmig ausgebildet ist. In dieser Ausführungsform können beispielsweise in einem ersten Tastenfeldbereich die Tasten eines normalen Eingabebereichs (Schreibmaschinentastatur) und in den weiteren Tastenfeldbereichen die Tasten eines Ziffernblocks, eines Cursor-Steuertastenblocks oder eines Funktionstastenblocks angeordnet sein.

Vorzugsweise weist das Gehäuseoberteil in den weiteren Tastenfeldbereichen eine annähernd konstante Wanddicke und Führungsdome für die Tasten auf.

Vorzugsweise sind Wellenmaxima und Wellenminima des in den Tastenfeldbereichen wellenförmig ausgebildeten Gehäuseoberteils einheitlich über die Tastenfeldbereiche ausgerichtet, so dass sich Wellenmaxima und Wellenminima über Grenzen benachbarter Tastenfeldbereiche hinweg fortsetzen, als ob nur ein einziger, großer Tastenfeldbereich vorhanden wäre.

Anhand der Zeichnungen wird die Erfindung im Folgenden eingehend erläutert.

Es zeigt:
Fig. 1 eine perspektivische Darstellung der Außenseite einer bevorzugten Ausführungsform eines Gehäuseoberteils einer erfindungsgemäßen Tastatur,
Fig. 2 eine perspektivische Darstellung der Innenseite der bevorzugten Ausführungsform gemäß Fig. 1 eines Gehäuseoberteils einer erfindungsgemäßen Tastatur und
Fig. 3 eine Schnittdarstellung quer zur Längsachse der bevorzugten Ausführungsform gemäß Fig. 1 eines Gehäuseoberteils einer erfindungsgemäßen Tastatur.

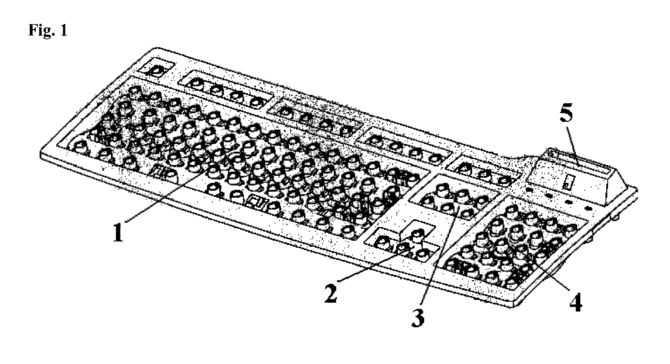

Aus der Darstellung gemäß Fig. 1 ist eine perspektivische Darstellung der Außenseite einer bevorzugten Ausführungsform eines Gehäuseoberteils einer erfindungsgemäßen Tastatur ersichtlich. Das Gehäuseoberteil weist links unten einen ersten Tastenfeldbereich (1) auf, der zur Anordnung der Tasten eines normalen Eingabebereichs (Schreibmaschinentastatur) dient. Rechts vom ersten Tastenfeldbereich (1) sind ein zweiter Tastenfeldbereich (2) und ein dritter Tastenfeldbereich (3) übereinander angeordnet. Der Tastenfeldbereich (2) dient zur Anordnung der Tasten eines Cursor-Steuertastenblocks. Rechts unten ist ein vierter Tastenfeldbereich (4) zu sehen, der zur Anordnung der Tasten eines Ziffernblocks dient. Oberhalb der Tastenfeldbereiche weist das Gehäuseoberteil eine Zeile für weitere Tasten wie beispielsweise Funktionstasten und einen Karteneinschubschacht (5) auf. In jedem der vier Tastenfeldbereiche ist eine Vielzahl von Führungsdomen angeordnet. So weist beispielsweise der zweite Tastenfeldbereich (2) vier Führungsdome und der dritte Tastenfeldbereich (3) sechs Führungsdome auf. Die rohrförmigen Führungsdome ragen aus dem Gehäuseoberteil heraus.

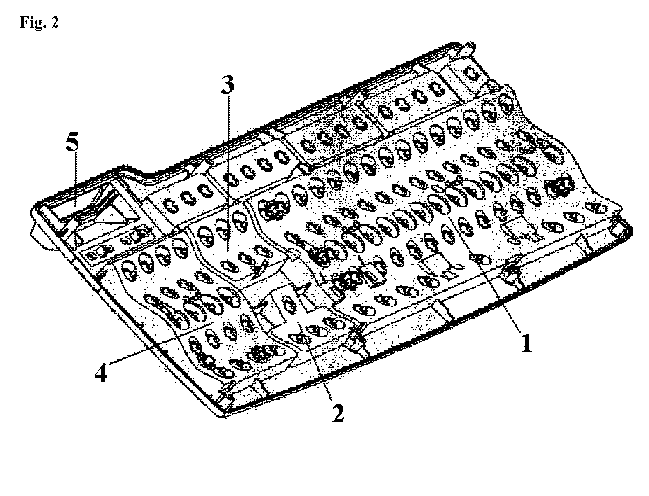

Aus der Darstellung gemäß Fig. 2 ist eine perspektivische Darstellung der Innenseite der bevorzugten Ausführungsform gemäß Fig. 1 eines Gehäuseoberteils einer erfindungsgemäßen Tastatur ersichtlich. Der Karteneinschubschacht (5) ist in dieser Abbildung links oben zu sehen. Darunter ist der vierte Tastenfeldbereich (4) zur Anordnung der Tasten eines Ziffernblocks dargestellt. Rechts neben dem vierten Tastenfeldbereich (4) sind der zweite Tastenfeldbereiche (2) zur Anordnung der Tasten eines Cursor-Steuertastenblocks und der dritte Tastenfeldbereich (3) übereinander angeordnet. Der erste Tastenfeldbereich (1) zur Anordnung der Tasten eines normalen Eingabebereichs (Schreibmaschinentastatur) ist rechts unten zu sehen. Oberhalb der Tastenfeldbereiche ist rechts von dem Karteneinschubschacht (5) die Zeile für weitere Tasten zu erkennen. Aus der Abbildung gemäß Fig. 2 ist deutlich die wellenförmige Ausbildung des Gehäuseoberteils in den vier Tastenfeldbereichen ersichtlich. Weiterhin ist zu erkenen, dass Wellenmaxima und Wellenminima des in den vier Tastenfeldbereichen wellenförmig ausgebildeten Gehäuseoberteils einheitlich über die vier Tastenfeldbereiche ausgerichtet sind, so dass sich die Wellenmaxima und Wellenminima über die Grenzen der vier Tastenfeldbereiche hinweg fortsetzen, als ob die vier Tastenfeldbereiche einen einzigen, großen Tastenfeldbereich bilden würden. Ebenso ist aus der Abbildung gemäß Fig. 2 ersichtlich, dass das in den vier Tastenfeldbereichen wellenförmig ausgebildete Gehäuseoberteil an zur Längsachse des Gehäuseoberteils parallelen Seiten der vier Tastenfeldbereiche in Bezug zur in der Abbildung gemäß Fig. 2 dargestellten Innenseite des Gehäuseoberteils ein Wellenmaximum aufweist, wodurch in den vier Tastenfeldbereichen des Gehäuseoberteils jeweils eine, in Bezug zur Außenseite des Gehäuseoberteils, wannenartige Vertiefung mit einem gewellten Boden entsteht. Die Rohröffnungen der Führungsdome sind in der Abbildung gemäß Fig. 2 als Bohrlöcher in dem Gehäuseoberteil zu erkennen. Im Bereich der Zeile für weitere Tasten ist das Gehäuseoberteil in der dargestellten Ausführungsform nicht wellenförmig ausgebildet. In weiteren bevorzugten Ausführungsformen kann das Gehäuseoberteil auch in diesem Bereich wellenförmig ausgebildet sein. Der Abbildung gemäß Fig. 2 ist zu entnehmen, dass eine erfindungsgemäße Tastatur in den Tastenfeldbereichen keine Versteifungsrippen aufweist.

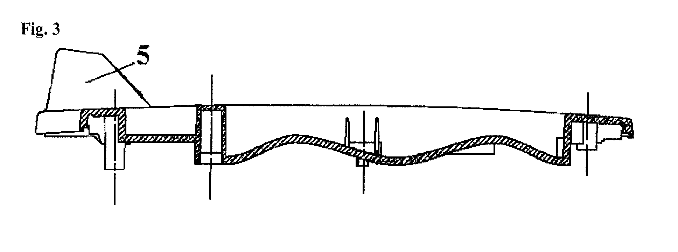

Aus der Darstellung gemäß Fig. 3 ist eine Schnittdarstellung quer zur Längsachse der bevorzugten Ausführungsform gemäß Fig. 1 eines Gehäuseoberteils einer erfindungsgemäßen Tastatur ersichtlich Der Karteneinschubschacht (5) ist in dieser Abbildung links oben zu sehen. Die Schnittfläche verläuft quer zur Längsachse des Gehäuseoberteils durch den ersten Tastenfeldbereich (1) und die Zeile für weitere Tasten, während der Karteneinschubschacht (5) in Blickrichtung hinter der Schnittfläche auf derselben Seite wie die Zeile für weitere Tasten liegt. Die in der Schnittfläche liegende Fläche des Gehäuseoberteils ist in der Abbildung gemäß Fig. 3 schraffiert dargestellt. Der erste Tastenfeldbereich (1) entspricht in der Abbildung gemäß Fig. 3 dem wellenförmig ausgebildeten Abschnitt der Schnittfläche. Am linken und rechten Rand sowie in der Mitte weist der erste Tastenfeldbereich (1) ein Wellenminimum auf. Die Breite der schraffierten Fläche entspricht der Wanddicke des Gehäuseoberteils, die, wie der Abbildung gemäß Fig.3 3 für den ersten Tastenfeldbereich (1) zu entnehmen ist, in den vier Tastenfeldbereichen annähernd konstant ist.

Eine erfindungsgemäße Tastatur benötigt keine Versteifungsrippen in den Tastenfeldbereichen. Dadurch kann im Vergleich zu einer Tastatur nach dem Stand der Technik Material eingespart werden. Weiterhin vereinfacht sich die Gestaltung der Werkzeugformen und der Herstellungsprozess.

Durch die erfindungsgemäße, wellenförmige Ausbildung des Gehäuseoberteils in den Tastenfeldbereichen wird weiterhin die Geräuschentwicklung beim Betätigen der Tasten reduziert, da die Schallwellen nicht nur nach oben in Richtung eines Benutzers abgegeben werden, wie es bei einer ebenen Fläche überwiegend der Fall ist, sondern durch das Wellenprofil auch zur Seite aufgefächert werden.

Die vorliegende Erfindung stellt somit eine Tastatur zur Verfügung, die im Vergleich zu einer Tastatur nach dem Stand der Technik aufgrund von Materialeinsparungen und Vereinfachungen im Produktionsprozess kostengünstiger herstellbar ist und gleichzeitig verbesserte Eigenschaften bezüglich der Geräuschentwicklung beim Betätigen der Tasten besitzt.

### Bezugszeichenliste

- 1: Erster Tastenfeldbereich
- 2: Zweiter Tastenfeldbereich
- 3: Dritter Tastenfeldbereich
- 4: Vierter Tastenfeldbereich
- 5: Karteneinschubschacht

## Patentansprüche

1. Tastatur mit einem Gehäuseoberteil, das einen Tastenfeldbereich zur Anordnung einer Vielzahl von Tasten aufweist, **dadurch gekennzeichnet, dass** das Gehäuseoberteil im Tastenfeldbereich wellenförmig ausgebildet ist.

2. Tastatur nach Anspruch 1, wobei das Gehäuseoberteil im Tastenfeldbereich Führungsdome aufweist.

3. Tastatur nach einem der vorhergehenden Ansprüche, wobei Wellenmaxima und Wellenminima des im Tastenfeldbereich wellenförmig ausgebildeten Gehäuseoberteils annähernd parallel zur Längsachse der Tastatur verlaufen.

4. Tastatur nach einem der vorhergehenden Ansprüche, wobei das im Tastenfeldbereich wellenförmig ausgebildete Gehäuseoberteil an zur Längsachse der Tastatur parallelen Seiten des Tastenfeldbereichs in Bezug zu einer Außenseite des Gehäuseoberteils ein Wellenminimum aufweist.

5. Tastatur nach einem der vorhergehenden Ansprüche, wobei das Gehäuseoberteil im Tastenfeldbereich eine annähernd konstante Wanddicke aufweist.

6. Tastatur nach einem der vorhergehenden Ansprüche, wobei das Gehäuseoberteil weitere Tastenfeldbereiche zur Anordnung einer Vielzahl von Tasten aufweist, **dadurch gekennzeichnet, dass** das Gehäuseoberteil in den weiteren Tastenfeldbereichen wellenförmig ausgebildet ist.

7. Tastatur nach dem vorhergehenden Anspruch, wobei das Gehäuseoberteil in den weiteren Tastenfeldbereichen eine annähernd konstante Wanddicke aufweist.

8. Tastatur nach einem der Ansprüche 6 bis 7, wobei das Gehäuseoberteil in den weiteren Tastenfeldbereichen Führungsdome aufweist.

9. Tastatur nach einem der Ansprüche 6 bis 8, wobei Wellenmaxima und Wellenminima des in den Tastenfeldbereichen wellenförmig ausgebildeten Gehäuseoberteils einheitlich über die Tastenfeldbereiche ausgerichtet sind.
